# EUROPEAN PATENT APPLICATION

(11) **EP 1 293 698 A1**
(43) Date of publication of application: **19.03.2003**
(21) Application number: 02256182.3
(22) Date of filing: 06.09.2002
(51) Int. Cl.: F16D 59/02

(54) **No-back brake assembly**

(30) Priority: 15.09.2001 GB 0122321
(71) Applicant: Lucas Industries Limited, West Midlands B90 4LA (GB)
(72) Inventor: Harvey, John Herbert, Perton, Wolverhampton WV6 7SJ (GB)
(74) Representative: Hopley, Joanne Selina

(57) **Abstract**

A no-back braking assembly (10) for a rotary actuator includes a rotatable input shaft (12), a rotatable output shaft (14), wherein said output shaft is coaxial with said input shaft, and braking means operably coupled with said output shaft (14). The braking means comprise first and second braking members (30,32) and biasing means (34), and torque transfer means mounted between said shafts (12,14) for transferring torque applied to said input shaft (12) to said output shaft (14). The first and second braking members (30,32) are relatively moveable between a first position in which they are in mutual engagement and in which rotation of said output shaft (14) is braked, and a second position in which they are mutually spaced and in which said output shaft (14) is capable of relatively free rotation, the biasing means (34) being arranged to urge the braking members (30,32) into their first position. The torque transfer means is arranged to overcome said biasing means (34), whereby to urge said first and second braking members (30,32) into their second position upon application of torque above a predetermined threshold to said input shaft (12), and to cause rotation of said output shaft (14).

## Description

The present invention relates to a no-back braking assembly for use with a rotary actuator susceptible to reverse drive.

The principle of operation of so-called "no-back" devices is known in the art, for example in connection with linear actuators such as ball-screw actuators. Such actuators are commonly used in aeronautical applications, for example for positioning of flight control surfaces on aircraft. The role of a no-back device is primarily to facilitate elimination of the effect of any forces tending to aid or oppose input torque applied to a screw of the actuator with a view to substantially preventing such forces back-driving the screw shaft.

Conventional no-back devices comprise a ratchet disk or wheel, connectable for rotation with the screw shaft of the actuator, and having a number of teeth disposed around the circumference of the disk. One or more pawl members are arranged to selectively engage with the teeth, thereby to permit the disk, and hence the screw shaft, to be rotated in a first direction but to prevent rotation of the disk in the opposite direction. Conventional no-back devices require axial loading to operate, and this makes them unsuitable for rotary applications.

It is an object of the present invention to provide an alternative type of no-back device, which is suitable for use with rotary applications.

According to the present invention there is provided a no-back braking assembly for a rotary actuator, the braking assembly comprising:
a rotatable input shaft;
a rotatable output shaft, said output shaft being co-axial with said input shaft; braking means operably coupled with said output shaft, said braking means comprising first and second braking members and biasing means; and
torque transfer means mounted between said shafts for transferring torque applied to said input shaft to said output shaft,
wherein said first and second braking members are relatively moveable between a first position in which they are in mutual engagement and in which rotation of said output shaft is prevented or braked, and a second position in which they are mutually spaced and in which said output shaft is capable of relatively free rotation, the biasing means being arranged to urge the braking members into their first position,
and wherein said torque transfer means is arranged to overcome said biasing means whereby to urge said first and second braking members into their second position upon application of torque above a predetermined threshold to said input shaft, and to cause rotation of said output shaft.

It will be understood that the output shaft will only rotate if sufficient torque is applied to the input shaft. Thus, even if any braking mechanism associated with the input shaft fails, vibration or other low-torque movement of the input shaft will have no adverse effect on the output shaft.

In one embodiment, the braking assembly includes an actuator. In one embodiment, said actuator is a ball screw actuator. The skilled person will understand that a ball screw actuator is a device for converting rotary motion into linear motion.

Alternatively, the actuator may be an acme screw and nut.

In a further alternative application, the output shaft forms a drive input to a rotary gearbox.

Preferably, said biasing means comprises a resiliently deformable member, such as a spring. More preferably, said biasing member is a disc spring.

Preferably, said braking members are relatively moveable between their first and second positions in a direction substantially parallel to the rotational axis of said input and output shafts.

Preferably, said first braking member is fixedly secured to the first housing portion, said relative movement between said first and second positions being entirely due to movement of said second braking member.

Preferably, said second braking member is carried by said output shaft, the engagement between the output shaft and the braking member being such that relative rotation between the second braking member and the output shaft is prevented.

Preferably, said torque transfer means comprises a ball/ramp mechanism. More preferably, said ball ramp mechanism comprises a channel formed by a recess in an end of the input shaft and an aligned corresponding recess in the second braking member, a ball being retained within the channel. Most preferably, a plurality of such channels and balls are provided.

It will be understood that the nature of the braking members is not particularly limited. For example they can be of any known type of frictional brake pad or brake pads having a mating interface.

According to a second aspect of the invention, there is provided a rotary actuator having a no-back brake assembly of the type herein described.

An embodiment of the present invention will now be described by way of example only with reference to the accompanying drawings, in which:-
Figure 1 is a sectional view of a braking assembly according to the present invention,
Figure 2 is a view along the line B - B of the braking assembly of Figure 1, and
Figure 3 is a partial sectional view of the braking assembly according to the present invention along the line C - C shown in Figure 2.

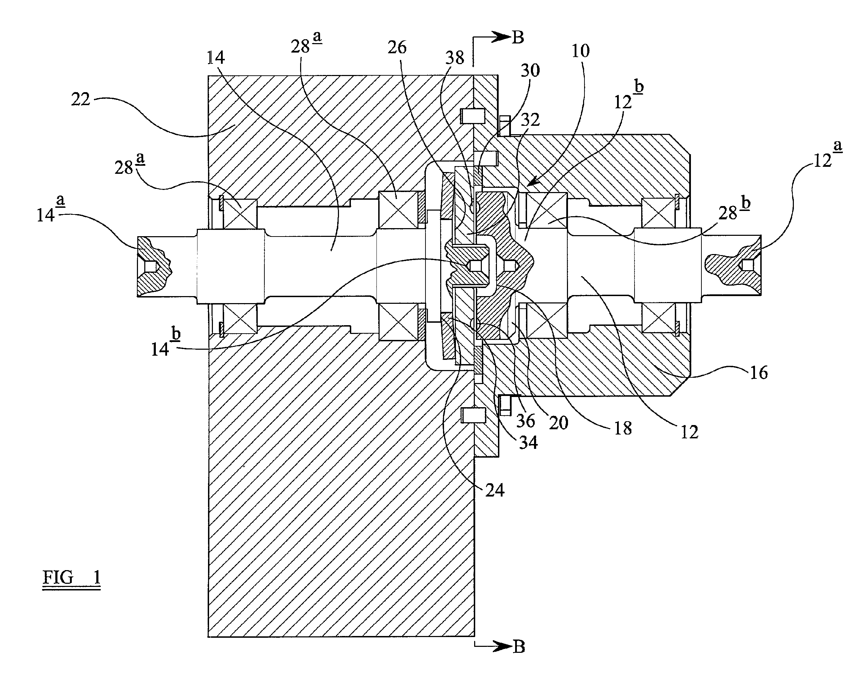

Referring to Figure 1, a braking assembly 10 includes a rotatable input shaft 12 and a rotatable output shaft 14. The input shaft 12 is mounted in a first housing part 16 and is driveable clockwise or counter-clockwise by a motor driven gear box (not shown) located at its first end 12a. At its second end 12b, the input shaft 12 has a central recess 18 and is outwardly stepped to form an annular rim 20. The rotatable output shaft 14 is located in a second housing part 22 and is mounted co-axially with the input shaft 12, the two housing parts 16,22 being bolted together. The output shaft 14 forms the rotary drive input to a screw-type actuator, for example an acme screw and nut actuator or a ball screw actuator. Alternatively, the output shaft 14 may form the drive input to a rotary gearbox-type actuator. Typically, the actuator may be of a type suitable for driving, for example, helicopter rotor blade locking pins (not shown) into or out of their operational position, or may be used to drive flight control surfaces or slats of an aircraft wing structure.
The actuator may be of a conventional type in which a first end 14a of the output shaft 14 is in screw threaded engagement with a further shaft (not shown).

One application of the braking assembly in Figure 1, may be for a helicopter rotor blade locking pin. For example, the further shaft may be coupled to the locking pin or pins of the helicopter blade, such that translatory motion of the further shaft causes the pin(s) to be driven into and out of their operational position.

A second end region 14b of the output shaft 14 is square shaped and of reduced dimensions relative to the rest of the output shaft 14, and is partly located in the central recess 18 of the input shaft 12. However, it should be noted that the input and output shafts 12, 14 are never in mutual abutment. An outwardly extending region of the output shaft 14 located towards its second end 14b is inwardly stepped toward the second end 14b of the output shaft 14 to provide first and second annular abutment surfaces 24, 26 facing the input shaft 12. The input and output shafts 12, 14 are mounted on bearings 28a, 28b respectively.

A first braking member in the form of an annular brake disc 30 is mounted between the first and second housing parts 16,22 surrounding and spaced from the second end 12b of the input shaft 12. A second braking member in the form of a circular brake pad 32 having a central square locating aperture (not shown) is a close sliding fit onto the square second end 14b of the output shaft 14 so as to be constrained to rotate with the output shaft 14. In the position shown in Figure 1, the brake pad 32 is urged into abutment with the brake disc 30 by a disc or coil spring 34 which is mounted between the first abutment surface 24 of the output shaft 14 and the brake pad 32. The brake pad 32 is spaced a short distance from the second abutment surface 26, but is moveable in a direction parallel to the axis of the output shaft 14 into abutment with the second abutment surface 26 upon application of a force sufficient to overcome the disc spring 34.

As an alterative to providing the brake pad 32, a multi-plate brake assembly may be provided. Additionally, as an alternative to providing the square locating aperture feature, a spline arrangement or other interference fit may be provided to prevent rotation between the braking member and the shaft 14.

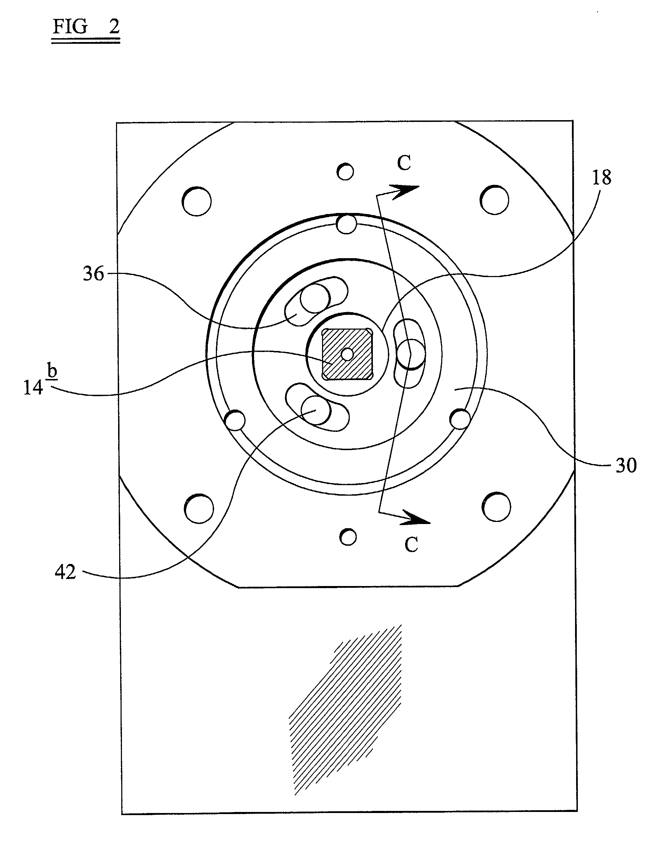

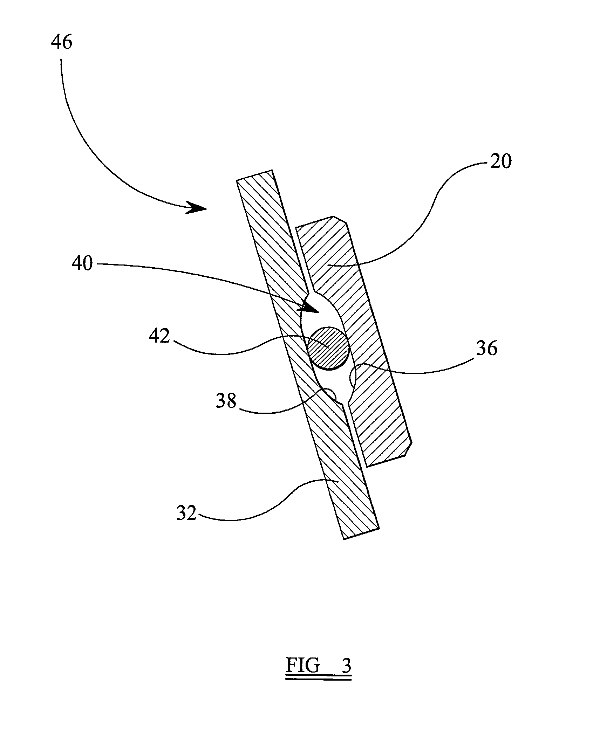

Referring also to Figures 2 and 3, the annular rim 20 of the input shaft 12 is provided with three elongated arcuate recesses 36 in its end face. Corresponding recesses 38 are also provided in an adjacent face of the brake pad 32. The recesses 36, 38 in the face of the brake pad 32 and the end face of the annular rim 20 of the input shaft 12 are aligned such that each pair of recesses forms a channel 40 within which a ball 42 is retained. At its midpoint, the height and width of each channel 40 corresponds approximately to the diameter of the ball 42. Towards the ends of each channel 40, the recess walls are arcuately inwardly tapered so that at each end, the height of the channel 40 is less than the diameter of the ball 42. The height of the channel shall be understood to be the dimension parallel to the rotational axes of the input and output shafts. It will be readily apparent to a skilled person that the channels 40 and balls 42 constitute what is commonly referred to as a ball-ramp mechanism 46.

In use, when no torque is applied to the input shaft 12, the ball/ramp mechanism 46 is maintained in its equilibrium position. In this position, the ball 42 sits in the centre of the channel 40 (see Figure 3) and the brake pad 32 is biased into mutual abutment with the brake disc 30 by the disc spring 34, thereby preventing rotation of the output shaft 14 (Figure 1). In this embodiment the brake pad 32 and the brake disc 30 form a frictional brake which prevents rotation of the output shaft 14. In a slight modification, the brake pad 32 and/or the brake disc 30 are provided with a surface coating to increase the coefficient of friction between them or mating face formations to provide a positive lock. The braking of the output shaft 14 in turn prevents unwanted movement of the screw actuator.

When it is desired to move, for example, the helicopter rotor blade locking pins from their locked position to their unlocked position, or vice versa, it is necessary to rotate the output shaft 14 so as to impart translatory movement to the further shaft coupled to the locking pins. This is achieved by application of a sufficiently high torque to the input shaft 12. As the input shaft 12 is rotated, each pair of recesses 36, 38 forming the channels 40 become increasingly misaligned until the recess walls start to ramp over the balls 42, forcing the brake pad 32 away from the input shaft 12 against the action of the disc spring 34, thereby disengaging the brake pad 32 from the brake disc 30. Eventually, the balls 42 reach the end of the recesses 36, 38 and no further ramping is possible.

Continued application of the high torque results in rotation of the output shaft 14 by virtue of the force applied by the trapped balls 42 to the recess walls of the brake pad 32 and the recess walls within the annular rim 20. Thus, the ball-ramp mechanism 46 serves as a brake disengagement mechanism and as a torque transfer mechanism for transferring torque between the input shaft 12 and the output shaft 14. It will be understood that the torque required to rotate the output shaft 14 is primarily dependent upon the force required to overcome the bias of the disc spring 34.

Low torque actuation of the input shaft 12, such as vibration, will not result in corresponding rotation of the output shaft 14. Although the recesses 36,38 will become misaligned as described above, the low torque will be insufficient to cause ramping and therefore the brake pad 32 and brake disc 30 will remain in mutual abutment under the influence of the disc spring 34. Thus, the locking pins associated with the output shaft 14 remain in their required position irrespective of any braking means applied to the input shaft 12.

Although the above braking assembly does not require the input shaft 12 to be separately braked, the assembly of the present invention is advantageously employed with existing input shaft braking systems, and serves as a back up fail safe braking system.

It will be understood that the braking assembly of the present invention can be employed in any suitable rotary actuation system, for example, actuation of moveable flight surfaces of aircraft wings. Unlike previously described no-back systems, the braking assembly of the present invention need not be located inside the actuator, but can be positioned anywhere along the drive train.

## Claims

1. A no-back braking assembly (10) for a rotary actuator, the braking assembly comprising:
a rotatable input shaft (12);
a rotatable output shaft (14), said output shaft being co-axial with said input shaft;
braking means operably coupled with said output shaft (14), said braking means comprising first and second braking members (30, 32) and biasing means (34); and
torque transfer means (46) mounted between said shafts (12, 14) for transferring torque applied to said input shaft (12) to said output shaft (14), wherein said first and second braking members (30, 32) are relatively moveable between a first position in which they are in mutual engagement and in which rotation of said output shaft (14) is braked, and a second position in which they are mutually spaced and in which said output shaft (14) is capable of relatively free rotation, the biasing means (34) being arranged to urge the braking members (30, 32) into their first position,
and wherein said torque transfer means is arranged to overcome said biasing means (34) whereby to urge said first and second braking members (30, 32) into their second position upon application of torque above a predetermined threshold to said input shaft (12), and to cause rotation of said output shaft (14).

2. A no-back braking assembly according to claim 1, wherein the output shaft (14) forms a drive input to a screw-type actuator.

3. A no-back braking assembly according to claim 1, wherein the output shaft (14) forms a drive input to a rotary gearbox actuator.

4. A no-back braking assembly according to claim 2 or claim 3, wherein the braking assembly includes the actuator.

5. A no-back braking assembly according to claim 4, whereby the actuator is arranged to drive a flight control surface of an aircraft.

6. A no-back braking assembly according to any preceding claim, wherein said biasing means (34) comprises a resiliently deformable member.

7. A no-back braking assembly according to claim 6, wherein said biasing member is a disc spring (34) or a coil spring.

8. A no-back braking assembly according to any preceding claim, wherein said braking members (30, 32) are relatively moveable between their first and second positions in a direction substantially parallel to the rotational axis of said input and output shafts (12, 14).

9. A no-back braking assembly according to any preceding claim, wherein said first braking member (30) is fixedly secured to a first housing portion (16), said relative movement between said first and second positions being entirely due to movement of said second braking member (32).

10. A no-back braking assembly according to any preceding claim, wherein said second braking member (32) is carried by said output shaft (14), the engagement between the output shaft (14) and the braking member (32) being such that relative rotation between the second braking member (32) and the output shaft (14) is prevented.

11. A no-back braking assembly according to any preceding claim, wherein said torque transfer means comprises a ball/ramp mechanism (46).

12. A no-back braking assembly according to claim 11, wherein said ball ramp mechanism (46) comprises a channel (40) formed by a recess (32) in an end of the input shaft (12) and an aligned corresponding recess (38) in the second braking member (32), a ball (42) being retained within the channel.

13. A no-back braking assembly according to claim 12, wherein a plurality of such channels (40) and balls (42) are provided.
